# Europäisches Patentamt

## European Patent Office

## Office européen des brevets

(19)

(11) Veröffentlichungsnummer: **0 015 362**
**A1**

(12) **EUROPÄISCHE PATENTANMELDUNG**

(21) Anmeldenummer: **80100154.6**

(22) Anmeldetag: **14.01.80**

(51) Int. Cl.³: **G 03 B 23/16, G 03 B 23/04**

(30) Priorität: **07.03.79 DE 2908883**

(43) Veröffentlichungstag der Anmeldung: **17.09.80**
**Patentblatt 80/19**

(84) Benannte Vertragsstaaten: **AT BE CH FR GB IT LU NL SE**

(71) Anmelder: **Rollei-Werke Franke & Heidecke GmbH + Co KG, Salzdahlumer Strasse 196, D-3300 Braunschweig (DE)**

(72) Erfinder: **Prochnow, Claus, Lange Strasse 38, D-3300 Braunschweig (DE)**

(74) Vertreter: **Pretzell, Hellmut, Dipl.-Ing., Salzdahlumer Strasse 196, D-3300 Braunschweig (DE)**

(54) Diaprojektor, insbesondere Überblendprojektor.

(57) Es ist ein Diaprojektor, insbesondere zwei aus einem Diamagazin beschickte Projektionseinheiten aufweisender Überblendprojektor, mit einer zur Aufnahme eines Stabmagazins (10) hergerichteten Magazinführungsbahn (24) angegeben, der platzsparend und im projektionsbereiten Zustand fest im Wohnraum installiert werden kann und somit durch Wegfall der Rüstzeiten für eine Diavorführung Anreiz zu einem häufigeren Gebrauch gibt. Voraussetzung ist hierfür ein einfacher und raumsparender Magazinwechsel ohne Änderung des Standorts des Diaprojektors. Hierzu ist der die Dias (11) im Diamagazin (10) von Magazinbodenniveau auf Dia-Ausschiebeniveau anhebende Hebekörper (27) relativ zur Magazinführungsbahn (24) beweglich angeordnet und in der Magazinführungsbahn (24) eine Längsausnehmung (44) zum Durchtritt des Hebekörpers (27) vorgesehen. Am Hebekörper (27) greift ein Betätigungsgetriebe (29) an, das zumindest eine Ablagestellung aufweist, in welcher der Hebekörper (27) ganz oder teilweise aus der Magazinführungsbahn (24) ausgeschwenkt ist.

EP 0 015 362 A1

- 1 -

## Diaprojektor, insbesondere Überblendprojektor

Die Erfindung betrifft einen Diaprojektor, insbesondere einen zwei aus einem Diamagazin beschickte Projektionseinheiten aufweisenden Überblendprojektor, der im Oberbegriff des Anspruchs 1 definierten Gattung.

Ein solcher Diaprojektor ist für die Aufnahme des sogenannten Einheitsmagazins hergerichtet. Dieses Magazin ist ein Stabmagazin mit einer Vielzahl von aneinandergereihten Fächern zur Aufnahme jeweils eines Dias. Bei diesem Stabmagazin ist eine Querausschiebung der Dias, also quer zu dessen Längsachse, vorgesehen. Hierzu ist die eine Seitenwand des Magazins bis auf eine schmale Randleiste reduziert, so daß die einzelnen Diafächer an dieser Seite offen sind. Zum Ausschub der einzelnen Dias ist es notwendig, die Dias im Magazin auf Ausschiebeniveau anzuheben, in welchem der untere Rand der Dias oberhalb dieser verbliebenen Randleiste liegt. Hierzu sind in dem Magazin zwei Längsnuten vorgesehen, die alle Diafachwände durchdringen. In diese Längsnuten kann mindestens ein projektorseitiger Hebekörper zum Anheben der Dias auf Ausschiebeniveau eindringen.

Bei einem bekannten Diaprojektor der eingangs genannten Art (DE-PS 10 33 928) ist der Hebekörper als eine in der Magazinführungsbahn, und zwar im Bereich des Diawechslers, angeordnete Anheberampe ausgebildet. Diese Anheberampe

weist einen mittleren Teil auf, der mindestens so hoch ist wie die Randleiste des Magazins und der in Längsrichtung der Magazinführungsbahn beidseitig bis auf diese herab abgeschrägt ist. Beim schrittweisen Vorschub des Magazins werden mittels dieser Anheberampe die im Bereich des Diawechslers sich befindenden Dias schrittweise und allmählich von ihrem Magazinbodenniveau aus im Magazin auf das Ausschiebeniveau angehoben. Befinden sie sich hier, so kann nunmehr der Diawechsler die einzelnen Dias durch Querverschiebung dem Magazin entnehmen oder diese wieder in das Magazin zurückführen.

Diese Art der Diaanhebung hat den Nachteil, daß das Magazin infolge des in einer der Längsnuten des Magazins eingreifenden Hebekörpers lediglich in Längsrichtung der Magazinführungsbahn in diese ein- und aus dieser ausgeschoben werden kann. Dies bedeutet, daß der Projektor so aufgestellt werden muß, daß zumindest während einer Diavorführung vor und hinter der Magazinführungsbahn eine volle Magazinlänge Freiraum vorhanden ist. Bei einem Stabmagazin für 50 Dias bedeutet dies immerhin einen lichten Abstand von ca. 30 cm vor und hinter der Magazinführungsbahn. Dieser zusätzlich erforderliche, über das eigentliche Gehäusevolumen des Projektors hinausgehende Raum zur projektionsbereiten Aufstellung des Projektors führt dazu, daß der Projektor keinen festen Standort erhält, wie z.B. ein Stereoreceiver oder ein Tonbandgerät oder ein Schallplattenspieler, sondern für eine Diavorführung immer erst aufgebaut und anschließend wieder weggestellt wird. Dadurch werden erhebliche Rüstzeiten für eine einzige Diavorführung erforderlich, was wiederum dazu führt, daß Diavorführungen häufig unterbleiben, da man den Arbeits- und Zeitaufwand bis zur vorführungsbereiten Aufstellung des Projektors meistens scheut.

Aus der GB-PS 1 132 558 ist ein Überblendprojektor bekannt, der zur Aufnahme eines Rundmagazins hergerichtet ist. Das Rundmagazin ist in dem Projektor oberhalb der beiden Projektionseinheiten aufgenommen und die Diabühnen jeder Projektionseinheit bilden eine Art Fallschacht, in welche jeweils das zu projizierende Dia infolge der Schwerkraft einfällt. Nach er-

folgter Projektion wird das Dia mittels eines Hebemechanismus vertikal durch den Boden des Diamagazins wieder in das Diafach zurückgeführt. Dieses Konstruktionsprinzip läßt sich nicht auf Projektoren übertragen, die für die Aufnahme des Stabmagazins hergerichtet sind, das vor allem wegen seiner Stapelfähigkeit hierzulande eine wesentlich größere Verbreitung gefunden hat als das sogenannte Rundmagazin.

Aus der US-PS 3 501 232 ist ein Überblendprojektor mit zwei separaten Projektionseinheiten bekannt, bei welchem jedoch nur ein einziger Projektionsstrahlengang aus dem Projektorgehäuse herausgeführt ist, der wechselweise von der einen und anderen Projektionseinheit erzeugt wird. Im Projektorgehäuse angeordnete Reflektionsspiegel sorgen hierbei für eine entsprechende Ab- bzw. Umlenkung der einzelnen, von den Projektionseinheiten kommenden Projektionsstrahlen. Auch bei diesem Projektor, der für ein Stabmagazin hergerichtet ist, liegt das Magazin oberhalb der beiden Projektionssysteme. Dadurch baut der Projektor relativ hoch und weist einen relativ komplizierten Diawechselmechanismus auf. Auch bei diesem Überblendprojektor ist die Verwendung des weit verbreiteten Einheitsmagazins mit seinen vorstehend beschriebenen Eigenschaften nicht möglich, da hier der projektorseitige Anhebekörper fehlt, der die Dias im Magazin so weit anhebt, daß ihre Querausschiebung ermöglicht wird. Auch ein Magazinwechsel ist nur in Längsrichtung der Führungsbahn möglich, so daß auch hier die bereits eingangs genannten Nachteile auftreten.

Der Erfindung liegt die Aufgabe zugrunde, einen Projektor der eingangs genannten Art zu schaffen, der konstruktiv einfach, kompakt und vorzugsweise flach bauend ausgebildet ist, der raumsparend aufgestellt werden kann und bei welchem der Magazinwechsel bequem und ohne zusätzlichen Freiraum an den Stirnseiten der Magazinführungsbahn vorgenommen werden kann.

Diese Aufgabe ist bei einem Diaprojektor der im Oberbegriff des Anspruchs 1 definierten Gattung erfindungsgemäß durch die Merkmale im Kennzeichnungsteil des Anspruchs 1 gelöst.

Durch die erfindungsgemäßen Maßnahmen werden die Voraussetzungen dafür geschaffen, daß das Magazin quer zur Längsachse der Magazinführungsbahn aus dieser heraus- und in diese wieder eingeführt werden kann. Der Magazinwechsel erfolgt also über eine Längsseite der Magazinführungsbahn. Ein Freiraum an den Stirnseiten der Magazinführungsbahn in mindestens der Länge des Magazins ist dadurch nicht mehr notwendig. Der Projektor kann raumsparend aufgestellt werden, und zwar so, daß er jederzeit vorführbereit ist. Z.B. läßt sich der Projektor in einem Wandregal fest installieren, wobei der Magazinwechsel jederzeit über die Längsseite der Magazinführungsbahn von vorn durchgeführt werden kann, ohne daß es einer Lageänderung des Projektors zur Diavorführung bedarf. Dies hat den Vorteil, daß Diavorführungen wesentlich häufiger durchgeführt werden, da die Rüstzeiten für eine solche Diavorführung wesentlich verkürzt sind. Der Projektor braucht lediglich eingeschaltet und ein entsprechendes Magazin eingesetzt zu werden.

Eine bevorzugte Ausführungsform der Erfindung ergibt sich aus Anspruch 2. Dadurch, daß mittels der Hebeschiene alle im Magazin befindlichen Dias auf Ausschiebeniveau angehoben werden, fällt das bei dem eingangs beschriebenen Projektor mit Anheberampe auftretende Hinauf- und Hinunterschieben der Dias auf der Anheberampe beim schrittweisen Magazinvorschub fort. Ein Schaben von insbesondere scharfkantigen Dias auf einer ansteigenden Fläche - wie bei der Anheberampe - wird vermieden. Der Kraftaufwand zum schrittweisen Vorschieben des gefüllten Magazins ist daher beträchtlich geringer als bei dem eingangs beschriebenen bekannten Projektor, insbesondere dann, wenn das Magazin mit schweren Vollglasdias bestückt ist. Der Magazinantrieb kann daher wesentlich leistungsärmer und damit kleinvolumiger und preiswerter ausgelegt werden.

Eine besonders vorteilhafte Ausführungsform der Erfindung ergibt sich aus Anspruch 4, insbesondere in Verbindung mit Anspruch 5. Durch diese Maßnahmen entsteht ein kompakter, kleinvolumiger Diaprojektor, der - ähnlich wie ein HI-FI-Recorder - fest im Wohnraum, z.B. in einem Regal installiert werden kann. Das Einsetzen des Magazins erfolgt über die Vorderseite des Projektors, die auch die Bedienelemente trägt. Der Diaprojektor ist geschlossen und wird lediglich zum Magazinwechsel geöffnet. Dadurch erhält der Diaprojektor nicht nur ein verbessertes Aussehen, sondern auch Verschmutzung oder Verstaubung des Magazinaufnahmeraums wird weitgehend verhindert. Das diagefüllte Magazin kann ständig im Diaprojektor verbleiben, so daß der Diaprojektor stets vorführbereit ist und zum Vorführen der Dias es lediglich des Einschaltens des Diaprojektors bedarf. Selbst beim Transport des Diaprojektors kann das diagefüllte Magazin im Magazinaufnahmeraum verbleiben, da die Dias in ihrer Projektionsstellung von Projektor- oder Gehäuseteilen gehalten und gegen Herausfallen aus dem Magazin - selbst wenn dieses auf den Kopf gestellt wird - gesichert sind.

Eine besonders vorteilhafte Ausführungsform der Erfindung ergibt sich aus Anspruch 6. Durch den aus dem Magazinaufnahmeraum heraus- und einschiebbaren Laufboden, der das Magazin trägt, wird das Einsetzen bzw. Herausnehmen des Magazins in bzw. aus dem Diaprojektor wesentlich erleichtert. Dies führt dazu, daß der Magazinaufnahmeraum für diesen Vorgang nicht mehr im Sichtfeld des Bedienenden zu liegen braucht, so daß es dadurch möglich wird, den Diaprojektor in einer relativ hohen Projektionsposition anzuordnen.

Durch den am Laufboden angeordneten Seitenanschlag wird das Magazin auch bei nachlässigem Einsetzen in den Führungsboden automatisch lagerichtig in der Magazinführungsbahn gehalten. Die am Laufboden angeordnete Halteleiste sichert dabei         die lagegerechte Position der im Magazin auf Ausschiebeniveau angehobenen Dias, selbst dann, wenn der Diaprojektor transportiert wird, und stellt auch beim Einfahren und Ausschwenken des Laufbodens, bei welchem gleichzeitig die Dias angehoben bzw. abgesenkt werden, sicher, daß diese lagegerecht im Magazin verbleiben und nicht herausfallen können.

Eine vorteilhafte Ausführungsform der Erfindung ergibt sich aus Anspruch 8. Durch die Anlenkung des Schwenkhebels zum Verschwenken der Hebeschiene an der Führungsschiene für den Laufboden, wird sichergestellt, daß beim Hineinschieben des Laufbodens in den Magazinaufnahmeraum gleichzeitig und automatisch die Dias in ihr Ausschiebeniveau verbracht werden. Beim Herausziehen des Laufbodens werden die Dias automatisch wieder auf Magazinbodenniveau abgesenkt, so daß diese wieder fest und lagegerecht im Magazin gehalten sind.

Eine besonders vorteilhafte Ausführungsform der Erfindung ergibt sich dabei aus Anspruch 9. Durch diese Maßnahmen wird ein konstruktiv besonders einfaches und preiswertes Betätigungsgetriebe für die Hebeschiene geschaffen.

Von Bedeutung für die Erfindung sind noch zwei vorteilhafte Ausführungsformen, die Weiterbildungen der Ansprüche 5 - 10 darstellen. Bei der einen Ausführungsform ist die Abdeckblende schubkastenartig mit der Führungsschiene und/oder dem Laufboden verbunden. Bei der anderen vorteilhaften Weiterbildung der Ansprüche 5 - 10 ist die Abdeckblende als Schwenkklappe ausgebildet, die im oder am Gehäuse um eine Längsschwenkachse schwenkbar gehalten und über eine Stift-Schlitz-Verbindung mit der Führungsschiene und/oder dem Laufboden gekoppelt ist. Bei beiden Ausführungsformen wird mit Öffnen des Magazinaufnahmeraums durch Abziehen oder Abklappen der diesen abdeckenden Abdeckblende gleichzeitig der Führungsboden mit dem von ihm getragenen Magazin aus dem Magazinaufnahmeraum herausgezogen. Das Magazin liegt damit zum Auswechseln frei zugänglich für den Bedienenden. Nach Einsetzen des neuen Magazins wird in gleicher Weise nur durch einen einzigen Arbeitsvorgang, nämlich dem Anschieben oder Anklappen der Abdeckblende, das Magazin in den Magazinaufnahmeraum verbracht, gleichzeitig die Dias in Ausschiebeniveau angehoben und der Magazinaufnahmeraum vollständig verschlossen. Der Bedienungskomfort beim Magazinwechsel ist
damit beträchtlich erhöht.

Weitere besonders vorteilhafte Ausführungsformen der Erfindung ergeben sich, wenn man in Weiterbildung der Ansprüche
6 - 10 oder der obengenannten beiden Ausführungsformen einen
an der Führungsschine, vorzugsweise über ein Zahnstangen-
Getriebe, angreifenden elektromotoischen Antrieb vorsieht
und vorzugsweise eine in zumindest einer Endstellung der
Führungsschiene wirksame Rastung, die vorzugsweise eine
einen Führungsschienenvorsprung kraftschlüssig hintergreifende Rastfeder aufweist, vorsieht. Durch den elektromotorischen Antrieb der Führungsschiene wird dem Bedienenden
bis auf das Auswechseln des Magazins selbst   jegliche
manuelle Tätigkeit abgenommen. Ein Knopfdruck genügt, um
das Magazin automatisch aus dem Diaprojektor herausfahren
zu lassen und das neue Magazin wieder automatisch in diesen,
und zwar in projektionsbereite Position, zu verbringen.
Dadurch wird der Bedienungskomfort weiter gesteigert, was
dazu führt, daß häufiger Diavorführungen gemacht werden.

Weitere Ausführungsformen mit erfindungswesentlichen Aus
gestaltungen und Weiterbildungen der Erfindung sind Gegen
stand von weiteren, hier nicht

0015362

explizit genannten Ansprüchen, auf die hier ausdrücklich Bezug genommen wird.

Der vollständige Wortlaut der Ansprüche ist vorstehend allein zur Vermeidung unnötiger Wiederholungen nicht wiedergegeben, sondern statt dessen lediglich durch Nennung der Anspruchsnummer darauf Bezug genommen. Hierdurch haben jedoch alle diese Anspruchsmerkmale als an dieser Stelle ausdrücklich und erfindungswesentlich offenbart zu gelten.

Die Erfindung ist anhand von in den Zeichnungen dargestellten Ausführungsbeispielen im folgenden näher beschrieben. Es zeigen:

Fig. 1    eine perspektivische Ansicht eines Überblendprojektors,

Fig. 2    einen Schnitt längs der Linie II-II in Fig. 1,

Fig. 3    den gleichen Schnitt wie in Fig. 2, jedoch bei einem Überblendprojektor gemäß einem weiteren Ausführungsbeispiel.

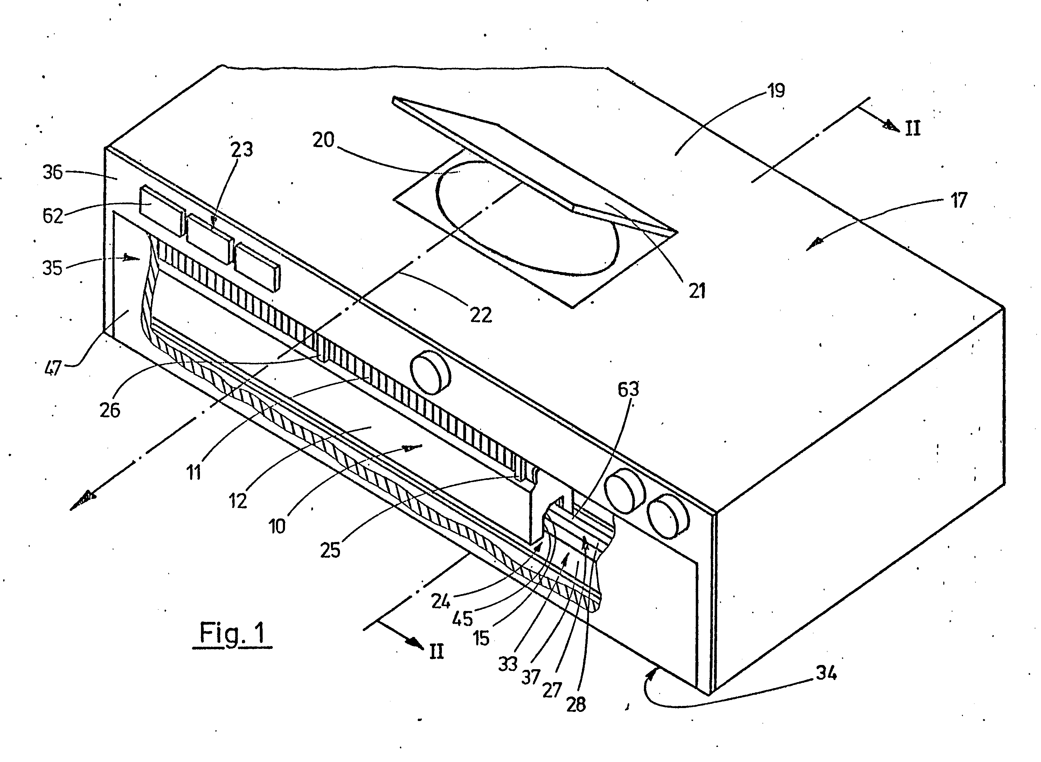

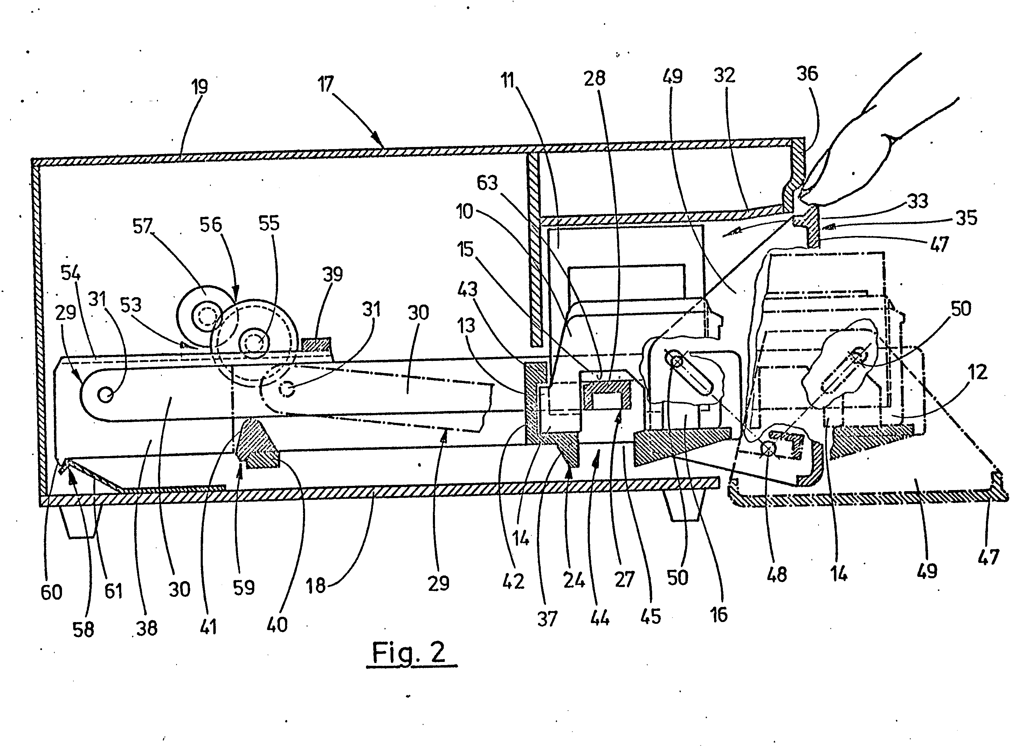

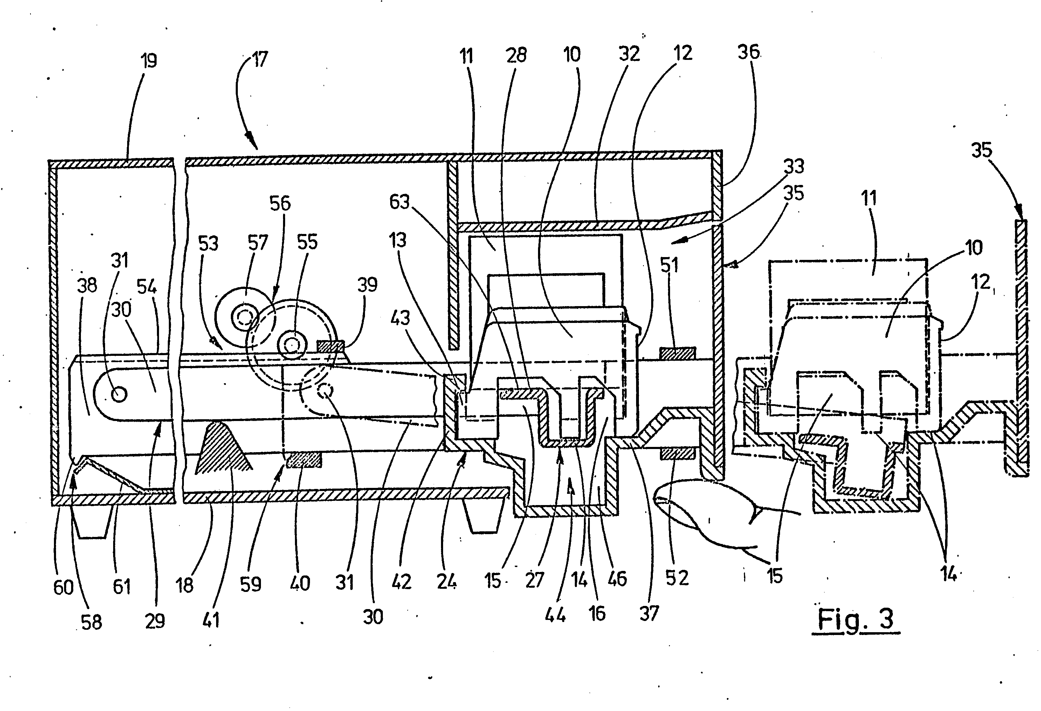

Der hier nachstehend beschriebene Diaprojektor ist ein sogenannter Überblendprojektor, bei welchem zwei getrennte Projektionseinheiten aus einem einzigen diagefüllten Magazin 10 beschickt werden. Das in Fig. 1 in perspektivischer Darstellung und in den Fig. 2 und 3 im Querschnitt zu sehende Diamagazin 10 ist ein Stabmagazin, das unter dem Namen "Einheitsmagazin" bekannt ist. Dieses Einheitsmagazin weist eine Vielzahl von einzelnen Diafächern auf, die jeweils durch eine Diafachwand voneinander getrennt sind. In jedem Diafach kann ein Dia 11 eingesteckt werden. Die in Fig. 2 und 3 rechte Seitenwand des Diamagazins 10 ist hochgezogen und reicht bis weit an die Oberkante der eingesetzten Dias 11. Die gegenüberliegende Seitenwand des Diamagazins 10, also in Fig. 2 und 3 links liegend, wird von einer schmalen Randleiste 13 gebildet. Die Diafächer sind auf dieser Seite des Diamagazins 10 offen und nur am Magazinboden 14 bis zur Höhe der Randleiste 13 abgedeckt. Im Projektor erfolgt eine Querausschiebung der Dias 11 aus dem Diamagazin 10, also auf der offenen Seite der Diafächer. Hierzu ist es notwendig, daß die Dias 11 so weit angehoben werden, daß ihre Unterkanten gerade oberhalb der Rand- leiste 13 liegen. Dies ist das sogenannte Ausschiebeniveau der Dias 11. Hierzu sind im Diamagazin 10 zwei bodenseitige Längsnuten 15 und 16 vorgesehen, die sich über die gesamte Länge des Diamagazins 10 erstrecken und durch alle Diafachwände hindurchgehen. Infolge dieser Längsnuten 15 und 16 verbleiben von dem Boden 14 des Diamagazins 10 lediglich drei schmale Bodenstege, auf denen die Dias 11 mit ihrer Unterkante aufsitzen.

Der in Fig. 1 als Überblendprojektor dargestellte Diaprojektor hat ein allseits geschlossenes Gehäuse 17. Dieses Gehäuse kann zweiteilig ausgebildet sein und eine Bodenplatte 18 und eine Haube 19 (Fig. 2 und 3) aufweisen. Von den beiden Projektionseinheiten des Überblendprojektors wird über ein Projektionsobjektiv 20 und einen Umlenkspiegel 21 ein gemeinsamer Projektionsstrahl 22 aus dem Gehäuse 17 herausgeführt. An der Vorderseite 34 des Projektors ist die Magazinführungsbahn 24 zu sehen, die das bekannte und vorstehend kurz beschriebene Diamagazin 10 aufnimmt. Der Projektor hat als Überblendprojektor zwei Diawechsler 25 und 26, die aus hier nicht interessierenden Gründen im Abstand voneinander angeordnet sind. Mittels der beiden Diawechsler werden die Dias 11 nacheinander quer zur Projektionsachse dem Diamagazin 10 entnommen, jeweils den beiden Projektionseinheiten zugeführt und wieder in das Diamagazin 10 zurückgeschoben. Bei jedem Diawechsel wird das Diamagazin 10 in bekannter Weise schrittweise um eine Diafachbreite in Längsrichtung verschoben.

Wie vorstehend bereits erwähnt, müssen zum Ausschieben der Dias 11 aus dem Diamagazin 10 die Dias 11 auf Ausschiebeniveau angehoben werden. Hierzu ist im Projektor ein relativ zur Magazinführungsbahn 24 beweglich angeordneter Hebekörper 27 vorgesehen, der von unten her in eine oder in beide Längsnuten 15 eingreift, sich an die zwischen den einzelnen Bodenstegen frei zugänglichen Unterseiten der Dias 11 anlegt und diese auf Ausschiebeniveau hochhebt. Der Hebekörper 27 ist hier als eine sich über die gesamte Magazinführungsbahn 24 erstreckende Hebeschiene 28 mit im wesentlichen ebener, horizontaler Dia-Tragfläche 63 ausgebildet. Die Hebeschiene 28 ist vertikal verfahrbar angeordnet und nimmt zwei Endstellungen ein. In der einen Endstellung befindet sich die Hebeschiene 28 mit ihrer Dia-Tragfläche 63 auf Dia-Ausschiebeniveau (in Fig. 2 und 3 ausgezogen dargestellt) und in der anderen Endstellung auf oder unter Magazinbodenniveau (in Fig. 2 und 3 strichpunktiert dargestellt). An der Hebeschiene 28 greift ein als Schwenkhebelgetriebe ausgebildetes Betätigungsgetriebe 29 an, das zwei Schwenkhebel 30 aufweist, die an oder nahe einem Ende der Hebeschiene 28 an dieser starr befestigt sind. In Fig. 2 und 3 ist jeweils nur der hintere Schwenkhebel 30 zu sehen. Die beiden Schwenkhebel 30 sind im Gehäuse 17 um eine im wesentlichen in Längsrichtung der Magazinführungsbahn 24, also quer zum Projektionsstrahl 22, ausgerichtete Schwenkachse 31 schwenkbar gehalten. Die Ablagestellung des Betätigungsgetriebes 29, in welcher die Hebeschiene 28 auf oder unter Magazinbodenniveau liegt, ist in Fig. 2 und 3 strichpunktiert dargestellt.

Das Gehäuse 17 deckt, wie Fig. 1 deutlich zeigt, die Magazinführungsbahn 24 stirnseitig ab und überdeckt diese in deren vollen Länge. Dabei hat die obere Gehäusewand oder ein mit ihr vorzugsweise einstückiger Gehäusesteg 32 einen solchen Abstand von der Magazinführungsbahn 24, daß bei in die Magazinführungsbahn 24 eingesetztem Diamagazin 10 die auf Ausschiebeniveau stehenden Dias 11 mit ihren Oberkanten bis dicht an die Gehäusewand oder diesen Gehäusesteg 32 reichen (Fig. 2 und 3). Hierdurch können die Dias 11 auch dann nicht aus dem Diamagazin 10 herausfallen, wenn der Projektor beim Transport auf den Kopf gestellt wird.

Das Gehäuse 17 und die Magazinführungsbahn 27 bilden einen im wesentlichen geschlossenen Magazinaufnahmeraum 33, der sich längs der Vorderseite 34 des Gehäuses 17 erstreckt und zu dieser hin offen ist. An der offenen Längsseite des Magazinaufnahmeraums 33 ist eine diesen abschließende Abdeckblende 35 vorgesehen, die im wesentlichen mit der Gehäusevorderwand 36 fluchtet und von dieser wegnehmbar ausgebildet ist. Bei dem Projektor in Fig. 1 und 2 ist diese Abdeckblende 35 als Schwenkklappe 37 ausgebildet (in Fig. 1 teilweise

0015362

aufgebrochen dargestellt), die abgeklappt werden kann und dadurch den Magazinaufnahmeraum 33 freilegt. Die Gehäusevorderwand 36 trägt die Bedienungselemente 23 des Projektors.

Die Magazinführungsbahn 24 weist einen über deren gesamte Länge sich erstreckenden Laufboden 37 auf, der das Diamagazin 10 aufnimmt. Dieser Laufboden 37 ist derart ausgebildet, daß er aus dem Magazinaufnahmeraum 33 aus-
zieh- oder ausschiebbar ist. Hierzu ist der Laufboden 37 an zwei sich quer
zu dessen Längsrichtung erstreckenden Führungsschienen 38 gehalten, von denen in den Fig. 2 und 3 lediglich die
hintere Führungsschiene 38 zu sehen ist. Diese Führungsschienen 38 erstrecken
sich längs den Stirnseiten des Gehäuses 17 und sind in diesem mittels Führungsnocken 39 und 40 längsverfahrbar geführt. Der Laufboden 37 ist an den Führungsschienen 38 starr befestigt. An jeder der beiden Führungsschienen 38 ist
jeweils einer der beiden starr mit der Hebeschiene 28 verbundenen Schwenkhebel 30 um jeweils ihre Schwenkachse 31 schwenkbar angelenkt. Im Verschiebeweg der beiden Führungsschienen 38 ist jeweils ein Schwenknocken 41 angeordnet, der beim Einschieben oder Einziehen der Führungsschienen 38 den
jeweils zugeordneten Schwenkhebel 30 derart verschwenkt, daß die Hebeschiene 28 bis in Dia-Ausschiebeniveau angehoben wird.

In beiden Projektoren gemäß Fig. 1 und 2 bzw. Fig. 3 weist der Laufboden
37 einen über dessen gesamte Länge sich erstreckenden Wandsteg 42 auf, der
einen Seitenanschlag für das eingesetzte Diamagazin 10 bildet. Dieser Wandsteg 42 trägt an seinem oberen Ende eine nach innen vorstehende Halteleiste
43. Auch diese Halteleiste 43 erstreckt sich über die gesamte Länge des Laufbodens 37 und ist lediglich im Bereich der beiden Diawechsler 25 und 26,
zumindest in der Breite eines Diafachs, ausgespart. Bei eingesetztem Diamagazin 10 übergreift diese Halteleiste 43 die Randleiste 13 des Diamagazins 10
und deckt somit die offenen Seiten der Diafächer teilweise ab. Dies bedeutet,
daß die Halteleiste 43 die auf Ausschiebeniveau angehobenen Dias 11 seitlich
führt und hält, so daß nur die in den beiden Diawechselebenen befindlichen

0015362

Dias 11 aus dem Diamagazin 10 quer verschoben werden können. Diese Halteleiste 43 sorgt auch für sichere Führung der Dias 11 beim Ausschwenken oder Einschwenken des Laufbodens 37, so daß diese nicht aus dem Diamagazin 10 herausfallen können.

Damit die Hebeschiene 28 unter das Magazinbodenniveau abgesenkt werden kann, weist die Magazinführungsbahn 24 bzw. der Laufboden 37 eine Längsausnehmung 44 für den Durchtritt der Hebeschiene 28 auf. Bei dem Projektor gemäß Fig. 1 und 2 ist diese Längsausnehmung 44 als Längsschlitz 45 ausgebildet. Dies bedeutet, daß der Laufboden 37 praktisch zweiteilig ist, wobei beide Teile des Laufbodens 37 an den Führungsschienen 38 starr befestigt sind. Bei dem Projektor gemäß Fig. 3 hingegen ist die Längsausnehmung 44 als Längsrinne 46 ausgebildet, in die die gesamte Hebeschiene 28 zumindest so weit eintauchen kann, daß ihre Oberkante unterhalb der Bodenstege des Diamagazins 10 liegt. Die Hebeschiene 28 selbst kann vom Magazinbodenniveau aus entweder nur in eine der Längsnuten 15, 16 des Diamagazins 10 einschwenken (Fig. 2) oder aber auch durch entsprechende Ausbildung gleichzeitig in beide Längsnuten 15, 16 (Fig. 3).

Wie bereits erwähnt, ist bei dem Projektor gemäß Fig. 1 und 2 die Abdeckblende 35 als Schwenkklappe 47 ausgebildet, die um eine Längsschwenkachse 48 schwenkbar am Gehäuse 17 gehalten ist. Hierzu hat die Schwenkklappe 47 an beiden Enden im wesentlichen rechtwinklig von ihr abstehende, in den Magazinaufnahmeraum 33 hineinragende, trapezförmige Seitenwände 49, die gelenkig mit den stirnseitigen Seitenwänden des Gehäuses 17 verbunden sind. Über je eine Stift-Schlitz-Verbindung 50 sind die beiden Seitenwände 49 mit einer der Führungsschienen 38 gekoppelt, so daß beim Abklappen der Schwenkklappe 47 die Führungsschienen 38 herausgezogen werden, bzw. beim Ausschieben der Führungsschienen 38 die Schwenkklappe 47 abgeklappt wird. In gleicher Weise werden beim Anklappen der Schwenkklappe 47 die Führungsschienen 38 eingeschoben bzw. beim Einfahren der Führungsschienen 38 die Schwenkklappe 47 an die Gehäusevorderwand 36, mit dieser im wesentlichen fluchtend, angeklappt.

Bei dem Projektor gemäß Fig. 3 ist die Abdeckblende 35 nach Art eines Schubkastens mit den beiden Führungsschienen 38 verbunden und steht im wesentlichen vertikal von diesen ab. Die Führungsschienen 38 sind hier durch zwei im Bereich des Magazinaufnahmeraums 33 an den Seitenwänden des Gehäuses 17 angeordnete weitere Führungselemente 51 und 52 zusätzlich abgestützt, so daß diese - ähnlich wie die Laufschienen bei einem Schubkasten - in Längsrichtung aus dem Gehäuse 17 herausgezogen oder in das Gehäuse 17 hineingeschoben werden können. Dies geschieht durch Hintergreifen der Abdeckblende 15 an ihrem unteren Rand.

Es ist auch möglich, in beiden Projektoren die Führungsschienen 38 elektromotorisch anzutreiben. Dies geschieht, wie in Fig. 2 und 3 angedeutet, am einfachsten mittels eines Zahnrad/Zahnstangen-Getriebes 53, wobei die Zahnstange 54 Teil mindestens einer der Führungsschienen 38 ist und das in der Zahnstange 54 kämmende Zahnrad 55 über ein Untersetzungsgetriebe 56 von einem Elektromotor 57 angetrieben wird. Die beiden Endstellungen der Führungsschienen 38 werden einerseits durch eine Rastung 58 bzw. durch einen Anschlag 59 an mindestens einer der beiden Führungsschienen 38 festgelegt. Hierzu weist zumindest eine der Führungsschienen 38 einen Vorsprung 60 auf, der in der einen Endstellung von einer Rastfeder 61 kraftschlüssig hintergriffen wird und in der anderen Endstellung an ein Führungselement 40 zur Führung der Führungsschienen 38 anschlägt.

Ein Wechsel des Diamagazins 10 bei dem Projektor gemäß Fig. 1 und 2 erfolgt wie nachstehend beschrieben:

Ausgehend von dem in Fig. 1 dargestellten betriebsbereiten Zustand des Projektors, bei welchem sich das Diamagazin 10 in dem Magazinaufnahmeraum 33 befindet, muß zunächst der Magazinaufnahmeraum 33 geöffnet werden. Dies geschieht durch Hintergreifen der Schwenkklappe 47 mittels eines Fingers (wie in Fig. 2 dargestellt) und Verschwenken der Schwenkklappe 47 im Uhrzeigersinn. Dabei dreht sich die Schwenkklappe 47 um ihre Schwenkachse 48

0015362

und über die Stift-Schlitz-Verbindung 50 werden die beiden Führungsschienen 38 in Fig. 2 nach rechts verschoben. Dadurch gleitet der das Diamagazin 10 tragende Laufboden 37 aus dem Magazinaufnahmeraum 33 heraus (in Fig. 2 strichpunktiert eingezeichnet). Mit zunehmendem Ausschieben des Laufbodens 37 sinkt wegen der Anordnung der Schwenknocken 41 und der Anlenkung der Schwenkhebel 30 an den Führungsschienen 38 die Hebeschiene 28 allmählich ab, verläßt die Längsnut 15 und tritt durch den Längsschlitz 45 im Laufboden 37 durch diesen hindurch. Bei dieser Bewegung der Hebeschiene 28 werden die Dias 11 im Diamagazin 10 allmählich abgesenkt und liegen in der in Fig. 2 strichpunktiert gezeichneten Stellung von Schwenkklappe 47, Laufboden 37 und Diamagazin 10 auf den schmalen Bodenstegen des Magazinbodens 14 auf. Die Hebeschiene 28 gibt das Diamagazin 10 frei und dieses kann nunmehr ausgewechselt werden.

Das neue Diamagazin 10 wird einfach auf den Laufboden 37 aufgesetzt und die Schwenkklappe 47 entgegen Uhrzeigersinn angehoben. Über die Stift-Schlitz-Verbindung 50 werden die Führungsschienen 38 wieder in das Gehäuseinnere hineingeschoben. Dabei gleiten die Schwenkhebel 30 mit ihrer Unterseite über die Schwenknocken 41 und werden mit zunehmendem Einschieben der Führungsschiene 38 allmählich entgegen Uhrzeigersinn verschwenkt, wodurch die Hebeschiene 28 eine Vertikalbewegung ausführt, durch den Längsschlitz 45 im Laufboden 37 hindurchtritt, in die Längsnut 15 des Diamagazins 10 einschwenkt und allmählich die im Diamagazin 10 befindlichen Dias 11 anhebt. Bei geschlossener Schwenkklappe 47 rastet mindestens eine der Führungsschienen 38 in die Rastung 58 ein, wie in Fig. 2 ausgezogen dargestellt ist. Die Schwenkhebel 30 nehmen die in Fig. 2 ebenfalls ausgezogen dargestellte Schwenkstellung ein. Die Hebeschiene 28 hat ihre obere Endstellung erreicht und hat die Dias 11 im Diamagazin 10 auf Ausschiebeniveau angehoben. Durch den Gehäusesteg 32 und durch die Halteleiste 43 sind sie gegen Herausfallen aus dem Diamagazin 10, selbst bei Transport des Projektors, gesichert. Der Projektor ist projektionsbereit, das Gehäuse 17 allseits geschlossen.

Anstelle der manuellen Betätigung der Schwenkklappe 47 genügt auch das Betätigen einer an der Gehäusevorderwand 36 angeordneten Magazinwechseltaste 62 (Fig. 1). Durch diese Taste 62 wird der elektromotorische Antrieb 53 bis 57 für die Führungsschienen 38 eingeschaltet. Der eben beschriebene Vorgang läuft in gleicher Weise ab, wobei allerdings hierbei die Schwenkklappe 47 von den Führungsschienen 38 betätigt wird.

Der Wechselvorgang für das Diamagazin 10 bei dem Projektor gemäß Fig. 3 ist im wesentlichen der gleiche. Hier wird lediglich die Abdeckblende 35 nicht geschwenkt, sondern, wie bei einem Schubkasten, von der Gehäuseseitenwand 36 abgezogen. Hierzu kann mit einem Finger die Unterkante der Abdeckblende 35 untergriffen werden, wie in Fig. 3 dargestellt ist. Führungsschienen 38, Laufboden 37 und Diamagazin 10 gleiten aus dem Magazinaufnahmeraum 33 heraus und nehmen die in Fig. 3 strichpunktiert dargestellte Lage ein. Hier liegt das Diamagazin 10 frei zugänglich neben dem Gehäuse 17 und kann leicht und schnell ausgewechselt werden. Die Bewegung der Hebeschiene 28 ist die gleiche wie vorstehend bei dem Projektor gemäß Fig. 1 und 2 beschrieben worden ist. Auch der Einschiebevorgang des Laufbodens 17 mit dem neuen Diamagazin 10 läuft in der gleichen Weise ab. Auch hier kann der Magazinauswurf bzw. das Einfahren des Diamagazins 10 in das Gehäuse 17 durch jeweils ein kurzes Betätigen der Magazinwechseltaste 62 ausgelöst werden.

Der elektromotorische Antrieb 53 bis 57 kann auch am Ende eines Magazindurchlaufs automatisch eingeschaltet werden, und zwar dann, wenn das letzte projizierte Dia wieder in das Diamagazin 10 eingeschoben worden ist. Dadurch erhält man einen automatischen Magazinauswurf, der ein gesondertes Betätigen der Magazinwechseltaste 62 oder diese überhaupt erübrigt. Dies kann dadurch erreicht werden, daß der Elektromotor 57 über zwei in Reihe geschaltete mechanisch betätigte Kontakte eingeschaltet wird, von denen der eine in der Endstellung des Diamagazins 10 und der andere dann geschlossen wird, wenn ein Dia in dem letzten Diafach vorhanden ist.

- . - . - . - . - . - . - . -

Patentansprüche:

1. Diaprojektor, insbesondere zwei aus einem Diamagazin beschickte. Projektionseinheiten aufweisender Überblendprojektor, mit einem Gehäuse, einer Magazinführungsbahn, die zur Aufnahme eines diagefüllten Stabmagazins mit zumindest einer bodenseitigen Längsnut und längs einer Magazinseitenwand offenen Diafächern für die Querausschiebung der Dias hergerichtet ist, mit mindestens einem Diawechsler und mit einem zumindest im Bereich des Diawechslers über die Magazinführungsbahn emporragenden und für das Eingreifen in zumindest eine der Längsnuten hergerichteten, im Magazin die Dias von Magazinbodenniveau auf Ausschiebeniveau anhebenden Hebekörper mit Dia-Tragfläche, dadurch gekennzeichnet, daß der Hebekörper (27) relativ zu der Magazinführungsbahn (24) beweglich, vorzugsweise vertikal verfahrbar, angeordnet ist und daß am Hebekörper (27) ein Betätigungsgetriebe (29), vorzugsweise ein Schwenkhebelgetriebe, angreift, das zumindest eine Ablagestellung, in welcher die Dia-Tragfläche (63) zumindest im Bereich des Diawechslers (25,26) auf Dia-Ausschiebeniveau liegt, und eine weitere Ablagestellung aufweist, in welcher die Dia-Tragfläche (63) auf oder unter Magazinbodenniveau liegt, vorzugsweise der Hebekörper (27) ganz oder teilweise aus der Magazinführungsbahn (24) ausgerückt ist.

2. Projektor nach Anspruch 1, dadurch gekennzeichnet, daß in der Magazinführungsbahn (24) eine Längsausnehmung (44) zum Durchtritt des Hebekörpers (27) vorgesehen ist und vorzugsweise daß der Hebekörper (27) als eine sich längs der vorzugsweise gesamten Magazinführungsbahn (24) erstreckende Hebeschiene (28) mit vorzugsweise ebener und horizontaler Dia-Tragfläche (63) ausgebildet ist.

3. Projektor nach Anspruch 1 oder 2, dadurch gekennzeichnet, daß das Betätigungsgetriebe (29) mindestens einen an der Hebeschiene (28) angreifenden, vorzugsweise zwei jeweils an oder nahe einem Ende der Hebeschiene (28) befestigte, Schwenkhebel (30) aufweist, der im Gehäuse (17) um eine im wesentlichen in Längsrichtung der Magazinführungsbahn (24) ausgerichtete Schwenkachse (31) schwenkbar gehalten ist.

4. Projektor nach einem der Ansprüche 1 - 3, dadurch gekennzeichnet, daß das Gehäuse (17) die Magazinführungsbahn (24) stirnseitig abdeckt und in deren vollen Länge überdeckt, vorzugsweise in einem solchen Abstand, daß die bei eingesetztem Magazin (10) auf Ausschiebeniveau stehenden Dias (11) mit ihren Oberkanten bis an das Gehäuse (17) oder an einen mit diesem vorzugsweise einstückigen Gehäusesteg (32) reichen, wobei Gehäuse (17) und Magazinführungsbahn (24) einen im wesentlichen geschlossenen und von einer Längsseite aus zugänglichen Magazinaufnahmeraum (33) bilden.

5. Projektor nach Anspruch 4, dadurch gekennzeichnet, daß der aus dem Gehäuse (17) austretende Projektionsstrahl (22) quer zur Längsachse der Magazinführungsbahn (24) und über diese hinweg ausgerichtet ist, daß die Längsseite des Magazinaufnahmeraums (33) die vorzugsweise Bedienungselemente (23) tragende Gehäusevorderseite (34) ist und vorzugsweise daß der Magazinaufnahmeraum (33) von einer mit der Gehäusevorderwand (36) fluchtenden und von dieser wegnehmbar, insbesondere abklappbar oder abziehbar, ausgebildeten Abdeckblende (35) abgeschlossen ist.

6. Projektor nach Anspruch 4 oder 5, dadurch gekennzeichnet, daß die Magazinführungsbahn (24) einen über die vorzugsweise gesamte Länge dieser sich erstreckenden Laufboden (37) für das Magazin (10) aufweist, der aus dem Magazinaufnahmeraum (33) auszieh- oder ausschiebbar ausgebildet ist und vorzugsweise daß der Laufboden (37) einen sich über dessen gesamte Länge erstreckenden, einen Seitenanschlag für das Magazin (10) bildenden Wandsteg (42) aufweist, der vorzugsweise an seinem oberen Ende eine im Bereich des Diawechslers (25, 26) ausgesparte, nach innen vorspringende Halteleiste (43) trägt, die zur mindestens teilweisen Abdeckung der seitlich offenen Diafächer bei auf dem Laufboden (37) aufgesetztem Magazin (10) hergerichtet ist.

-18-

0015362

7. Projektor nach Anspruch 6, dadurch gekennzeichnet, daß das Betätigungsgetriebe (29) mindestens eine sich quer zur Magazinführungsbahn(24) erstreckende, vorzugsweise im Gehäuse (17) längsverfahrbar geführte, Führungsschiene (38) aufweist, an welcher der Laufboden (37) starr gehalten ist.

8. Projektor nach Anspruch 7, dadurch gekennzeichnet, daß an der Führungsschiene (38) jeweils ein Schwenkhebel (30) angelenkt und dieser starr mit der Hebeschiene (28) verbunden ist.

9. Projektor nach Anspruch 8, dadurch gekennzeichnet, daß das Betätigungsgetriebe (29) mindestens einen im Verschiebeweg der Führungsschiene (38) angeordneten, beim Einschieben oder Einziehen dieser den Schwenkhebel (30) verschwenkenden Schwenknocken (41) aufweist und vorzugsweise daß die Anlenkung des Schwenkhebels (30) an der Führungsschiene (38) und die Anordnung des Schwenknockens (41) derart getroffen sind, daß in der einen Endstellung der Führungsschiene (38) die Hebeschiene (28) auf Dia-Ausschiebeniveau angehoben und in der anderen Endstellung Schwenknocken (41) und Schwenkhebel (30) außer Eingriff sind.

10. Projektor nach einem der Ansprüche 6 - 8, dadurch gekennzeichnet, daß die Längsausnehmung (44) für den Durchtritt der Hebeschiene (28) als Längsschlitz (45) oder Längsrinne (46) ausgebildet ist, die sich vorzugsweise über den gesamten Laufboden (37) erstrecken.

Fig. 1

Fig. 2

0015362

Fig. 3

**Europäisches Patentamt**

**EUROPÄISCHER RECHERCHENBERICHT**

00 15 362

Nummer der Anmeldung

EP 80 10 0154

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>DE - B - 1 109 406</u> (E. ZILLMER)<br><br>   * Spalte 2, Zeilen 27-52; Spalte 3, Zeilen 1-31; Figuren 1,2 *<br><br>-- | 1,2 |
| A | <u>FR - A - 2 146 048</u> (HANIMEX)<br><br>   * Seiten 3,4; Figuren 1-8 *<br><br>-- | 1,2 |
| | <u>US - A - 3 606 545</u> (R. HEINZMANN et al.)<br><br>   * Spalten 3,4; Spalte 5, Zeilen 1-49; Figuren 1-8 *<br><br>---- | 4 |

**KLASSIFIKATION DER ANMELDUNG (Int.Cl. 3)**

G 03 B 23/16
　　　　　23/04

**RECHERCHIERTE SACHGEBIETE (Int. Cl. 3)**

G 03 B 23/00
　　　　　23/02
　　　　　23/04
　　　　　23/06
　　　　　23/10

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 13-06-1980 | BOEYKENS |

EPA form 1503.1   06.78